# EUROPÄISCHE PATENTSCHRIFT

(11) **EP 0 510 397 B1**
(45) Veröffentlichungstag und Bekanntmachung des Hinweises auf die Patenterteilung: **05.07.1995**
(21) Anmeldenummer: 92105649.5
(22) Anmeldetag: 02.04.1992
(51) Int. Cl.: H01B 17/26

(54) **Stromdurchführung**
Current leadthrough
Traversé de courant

(30) Priorität: 26.04.1991 DE 4113701
(43) Veröffentlichungstag der Anmeldung: 28.10.1992
(73) Patentinhaber: MESSER GRIESHEIM GMBH, D-60270 Frankfurt (DE)
(72) Erfinder: Fieseler, Heinrich, W-4047 Dormagen 5 (DE); Hettinger, Wolfgang, W-5000 Köln 71 (DE); Lindackers, Dirk, W-5650 Solingen (DE)

(56) Entgegenhaltungen:
- CH-A- 225 239
- US-A- 4 760 216
- US-A- 4 782 197

## Beschreibung

Die vorliegende Erfindung betrifft eine Stromdurchführung für in einem Behälter, vorzugsweise einem isolierten Behälter für die Speicherung von tiefsiedenden verflüssigten Gasen, angeordneten Stromleiter, wobei der Stromleiter durch eine Durchführungsöffnung geführt ist, die gegenüber dem Stromleiter isoliert abgedichtet ist.

Insbesondere in einen doppelwandig isolierten Behälter für die Speicherung von Flüssigwasserstoff (s. beispielsweise - "gas aktuell", Firmenzeitschrift der Anmelderin, Nr. 36, 1989, Seite 17 - 21 "Flüssigwasserstoff als Kraftstoff in Versuchsfahrzeugen") zum Betrieb eines Kraftfahrzeuges mit Flüssigwasserstoff sind elektrische Komponenten, wie elektrische Heizung, Füllstandssonde installiert, deren Stromleiter/Anschlußleitungen aus dem Behälter herausgeführt werden müssen.

Es sind elektrische Durchführungen bekannt, die aus in einer Trägerplatte eingebetteten (verschmolzenen oder vergossenen) Isolatoren bestehen, durch welche die elektrischen Stromleiter geführt sind. Das Isoliermaterial besteht dabei fast ausschließlich aus Glas, Keramik oder Kunststoffharz; die elektrischen Stromleiter aus Metall.

Das Längenänderungsverhalten dieser verschiedenen Werkstoffe ist bei Temperaturwechseln sehr unterschiedlich. Ferner ist das Adhäsionsverhalten an den Kontaktflächen Metall/Isoliermaterial bestimmend für die Dichtqualität. Bei den bisher bekannten elektr. Durchführungen führt ein Abkühlen der Durchführungen und die dabei auftretenden Längenänderungen der verschiedenen Werkstoffe dazu, daß die Adhäsionsflächen zwischen Leiter und Isolator auf Zug und Scherung beansprucht werden.

Dies führt dann, insbesondere bei extremen Warm-/Kaltwechseln wie sie bei den genannten Behältern von Flüssigwasserstoff und Flüssighelium auftreten, zu einem häufigen Versagen dieser Durchführungen in bezug auf deren Dichtheit, so daß z. B. dadurch das zwischen einem Innen- und einem Außenbehälter befindliche Vakuum negativ beeinflußt wird.

Durch die spezielle Anwendung in einem LH₂-Tank aus Aluminium ergibt sich neben den geschilderten Problemen noch die Schwierigkeit, käufliche Stromdurchführungen in den Behälter einzubauen, da diese meist einen Adapter aus Edelstahl besitzen. Da aus fertigungs- und sicherheitstechnischen Gründen auf eine Flanschkonstruktion mit Dichtungselementen verzichtet werden soll, muß die Stromdurchführung direkt in den Innenbehälter eingeschweißt werden.

Aus diesem Grund können deshalb diese bekannten Durchführungen nicht eingesetzt werden, vielmehr wird der Stromleiter durch die Abgasleitung aus dem Behälter herausgeführt.

Diese Lösung ist jedoch sehr aufwendig und beeinflußt ungünstig die Sicherheit des gesamten Systems sowie die Gesamteinsatzzeit der elektrischen Komponenten.

Ausgehend von diesem Stand der Technik ist es Aufgabe der Erfindung, eine Stromdurchführung zu schaffen, die auch nach extremen Warm-/Kaltwechseln vakuumdicht ist und damit betriebsfähig bleibt. Diese Aufgabe wird durch die im Anspruch 1 angegebenen Merkmale gelöst.

Vorteilhafte Weiterbildungen sind in den Unteransprüchen 2 bis 5 angegeben.

Bei der Erfindung wird nunmehr der bevorzugt aus Aluminium bestehende elektrische Leiter durch das Kunststoffrohr (bevorzugt GFK-Rohr) gegenüber dem Behälter aus Aluminium isoliert, wobei bevorzugt durch eine erste Klebe-Schrumpfverbindung Kunststoffrohr und Behälter miteinander verbunden sind und durch eine zweite Klebe-Schrumpfverbindung der Anschluß des Leiters selbst als aktiver Gasverschluß auf dem offenen Ende des Kunststoffrohres befestigt wird. Dadurch werden Isoliermaterial (= Kunststoffrohr) und Dichtflächen nur auf Druck beansprucht und eine vakuumdichte Stromdurchführung erreicht.

Die Klebe-Schrumpfverbindung ermöglicht sehr dünne, glatte Klebeschichten, die absolut frei von Gas- und Lufteinschlüssen sind. Sie entsprechen daher dem Ideal einer Klebeverbindung. Diese Verbindung wird darüber hinaus ausschließlich auf Druck beansprucht, indem die Verbindung als Kegelsitz ausgebildet ist, bei welcher die Öffnung durch Wärmebehandlung auf das Rohr aufgeschrumpft wird. Wegen der geringeren thermischen Ausdehnung des glasfaserverstärkten Kunststoffes wird bei einer Erwärmung der Fügepartner vor dem Zusammenfügen eine Flächenpressung zwischen dem Aluminium und dem Kunststoffrohr erzielt, die jeglichen Anpreßdruck oder Einspannung der Fügeteile in eine entsprechende Vorrichtung entbehrlich macht. Die Flächenpressung ist bei vorheriger Erwärmung der Fügeteile auf 100°C so groß, daß die Verbindung, auch ohne Vorhandensein von Klebstoff, bei Raumtemperatur von Hand nicht wieder gelöst werden kann. Durch Anhebung der Temperatur oder bei Erwärmung der Aluminiumbehälter allein kann die Anpreßkraft noch weiter erhöht werden.

Bei der praktischen Fertigung werden die Fügeteile vor dem Klebstoffauftrag auf 100 °C erwärmt und anschließend unter leichter Drehbewegung zusammengesteckt. Die Aushärtung kann je nach Art des Klebstoffes in einem Ofen oder bei Raumtemperatur erfolgen. Die auf diese Art hergestellten Verbindungen gemäß der Erfindung wurden verschiedenen Temperaturwechselbeanspruchungs- und Alterungstests unterworfen. Sämtliche Proben überstanden die Tests unbeschadet und zeigten eine hervorragende Dichtigkeit.

Ausführungsbeispiele der Erfindung sind in den Zeichnungen dargestellt und werden im folgenden näher beschrieben. Dabei veranschaulicht
- Fig. 1: eine schematische Darstellung eines Kfz-Tanks für Flüssigwasserstoff mit Steuer- und Regeleinrichtungen
- Fig. 2: eine vergrößerte Darstellung des in Fig. 1 mit "A" bezeichneten Behälterausschnittes
- Fig. 3: ein weiteres Ausführungsbeispiel einer Stromdurchführung nach der Erfindung

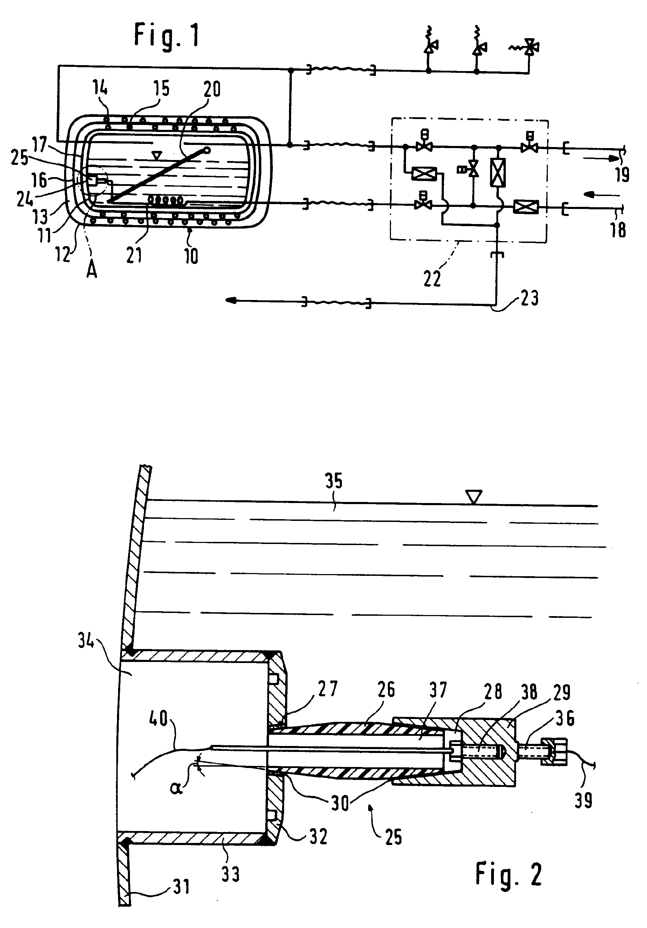

In Fig. 1 ist ein Kfz-Tank für Flüssigwasserstoff mit 10 bezeichnet, und als doppelwandiger, vakuumisolierter Behälter aus Aluminium ausgebildet.

Der Tank 10 besteht aus einem Aluminium-Innenbehälter 11 mit einem Fassungsvermögen von z. B. 93 Litern bei 0,5 MPa maximalem Betriebsdruck, der in einem Abstand von 40 mm vom Aluminium-Außenbehältermantel 12 umgeben ist. Um den Wärmetransport zwischen der umgebungswarmen Außenhülle und der -253°C kalten Oberfläche des Innenbehälters aufgrund von Konvektion, Leitung und Strahlung auf weniger als 10⁻⁴ (Wm⁻¹K⁻¹) zu reduzieren, ist der Zwischenraum 13 evakuiert. Im Vakuumraum 13 befindet sich eine Mehrschichten-Superisolation (10 »m Aluminium Folien; 70 »m Glasfaser-Papier) . Das im Innenbehälter 11 verdampfende Gas wird zunächst den Kühlleitungen 14, 15 zugeführt, wodurch zwei Strahlungsschilder 16, 17, die um den Innenbehälter 11 angeordnet sind, gekühlt werden. Die Strahlungsschilder 16, 17 sind aus Aluminium gefertigt und die Kühlleitungen 14, 15 aus Kupfer, wobei die Kühlleitungen 14, 15 als Kühlschlangen um die Strahlungsschilder 16, 17 geführt sind.

Der einwandfreie Betrieb des Tanks 10 im Fahrzeug erfordert zusätzliche Steuer- und Regel-Einrichtungen. In den Tank selbst führen insgesamt drei Leitungen. Zwei (18, 19) werden für die Befüllung bzw. Entnahme und die Versorgung des Motors benötigt. Die dritte Leitung 24 ist über die erfindungsgemäße Stromdurchführung 25 mit den elektrischen Anschlüssen einer im Innenbehälter 11 angeordneten, kapazitiven Füllstandssonde 20 und einer elektrischen Zusatzheizung 21 verbunden. Diese Zusatzheizung 21 sorgt unter bestimmten Entnahme-Bedingungen dafür, daß der Behälterdruck nicht zu weit abfällt.

Um den gesamten Wärmeeinfall in den Behälter so gering wie möglich zu halten, sind alle für die Betankung und Motorversorgung erforderlichen Ventile außerhalb des Tanks in einer separaten Steuereinheit 22 untergebracht. Diese für sich vakuumisolierte Ventilkombination enthält die Anschlüsse für die Betankung und ist mit dem Fahrzeugtank 10 bzw. der zum Motor führenden Kraftstoffleitung 23 über lösbare, vakuumisolierte Leitungen verbunden. Die Kombination und Schaltung der Ventile (4 Magnet- und 3 Rückschlagventile) sind in einer sehr kompakten, gewichts- und platzsparenden Anordnung zusammengefaßt. Die Ansteuerung der Ventile erfolgt in allen Betriebszuständen über eine frei programmierbare elektronische Steuerung. So kann z. B. - abhängig vom aktuellen Tankdruck - der Motor wahlweise mit Flüssigkeit oder Kaltgas versorgt werden. Auf diese Weise läßt sich die Speicherökonomie verbessern; Wenn man den Tankdruck durch Entnahme aus der Gasphase heruntergefahren hat, bevor das Fahrzeug abgestellt wird, kann der restliche Tankinhalt anschließend über längere Zeit ohne Verdampfungsverluste gespeichert werden.

In Fig. 2 ist der in Fig. 1 mit A bezeichnete Behälterausschnitt in vergrößerter Darstellung veranschaulicht.

Die in ihrer Gesamtheit mit 25 bezeichnete Stromdurchführung weist als Isolation ein Kunststoffrohr 26 auf, das einerseits mit der Durchführungsöffnung 27 im Behälter 11 und andererseits mit einer Anschlußöffnung 28 in einem Stromleiteranschlußstück 29 verbunden ist. Das Stromleiteranschlußstück 29 besteht vorzugsweise aus Aluminium. Das Kunststoffrohr 26 ist aus glasfaserverstärktem Epoxidharz gefertigt. Die Verbindungen zwischen dem Kunststoffrohr 26 und der jeweiligen Öffnung 27 bzw. 28 sind als Kegelsitze ausgebildet. Hierzu ist die Öffnung 27 konisch erweitert und die Öffnung 28 konisch verjüngt, mit einem Neigungswinkel α von 6 °, ausgebildet.

Dieser Neigungswinkel α braucht für die beiden Öffnungen nicht unbedingt gleich groß zu sein, sollte jedoch in jedem Fall zwischen 1 ° und 20 ° liegen. Das Kunststoffrohr 26 ist aus einem glatten, dickwandigen Rohr gefertigt, welches an beiden Enden konisch sich zuspitzend abgedreht wird, mit gleichem Neigungswinkel α wie die Öffnungen. Alle drei Teile können somit passend zusammengefügt werden.

Bei der Herstellung der Stromdurchführung 25 wird zunächst die sich konisch erweiternde Öffnung 27 auf etwa 100 °C erwärmt. Dann werden die Innenseite der Öffnung 27 und ein sich konisch zuspitzendes Ende des Kunststoffrohres 26 mit Klebstoff benetzt und unter leichtem Druck und leichter Drehung zusammengefügt. Wegen der thermischen Ausdehnung hat sich die konische Öffnung 27 geweitet, so daß bei der nun folgenden Abkühlung eine Flächenpressung zwischen der konischen Öffnung 27 und dem sich zuspitzenden Ende des Kunststoffrohres 26 entsteht. Diese Flächenpressung bewirkt zusammen mit dem aushärtenden Klebstoff eine vakuumdichte Verbindung des Kunststoffrohres 26 mit der Öffnung 27. Die Flächen des Kegelsitzes werden somit mit hohem Druck aufeinander gepreßt und die dünne Klebstoffschicht 30 wird ausschließlich auf Druck beansprucht. Eventuelle Zugkräfte werden von den Druckkräften des Preßsitzes aufgenommen.

Nachdem die Klebverbindung erkaltet und ausgehärtet ist, wird das freie Ende des Kunststoffrohres 26 und das Stromleiteranschlußstück 29 verbunden. Dazu wird das Stromleiteranschlußstück 29 oder nur seine sich konisch verjüngende Öffnung 28 auf etwa 100 °C erwärmt. Dann wird der Klebstoff auf die heiße Innenfläche der sich konisch verjüngenden Öffnung 28 des Stromleiteranschlußstückes 29 und auf das sich konisch zuspitzende Ende des Kunststoffrohres 26 aufgetragen. Beide Teile werden sodann sofort unter leichtem Druck und leichter Drehung ineinander gesteckt. Durch die Abkühlung des Stromleiteranschlußstückes 29 auf Raumtemperatur entsteht nun ein Preßsitz zwischen der sich konisch verjüngenden Öffnung 28 und dem sich konisch zuspitzenden Ende des Kunststoffrohres 26. Dieser Preßsitz ergibt wiederum zusammen mit dem Klebstoff eine vakuumdichte Verbindung.

Das beschriebene Herstellverfahren erfordert keinerlei Einspann- oder Zentriervorrichtungen. Wegen des geringen thermischen Ausdehnungskoeffizienten des glasfaserverstärkten Epoxidharzes, aus dem das Kunststoffrohr 26 gefertigt ist, ist außerdem sichergestellt, daß im Temperaturbereich von + 100 °C bis hinab zur Betriebstemperatur stets eine Flächenpressung zwischen dem Kunststoffrohr 26 und den Öffnungen besteht. Die Schicht aus Klebstoff 30 wird daher auf keinen Fall auf Zug beansprucht.

Beim Ausführungsbeispiel nach Fig. 2 ist die Öffnung 27 nicht direkt in der Wand 31 des Behälters 11 angebracht, sondern in einem Aluminium-Flansch 32, der an ein Aluminiumrohr 33 angeschweißt ist, welches seinerseits in eine Behälteröffnung 34 eingeschweißt ist. Dabei weist der Flansch 32 und das mit ihm verbundene Kunststoffrohr 26 sowie das Stromleiteranschlußstück 29 in das Behälterinnere 35. Dadurch sind bei der Isolation des Behälters keine hervorstehenden Bauteile störend.

Das Stromleiteranschlußstück 29 weist ferner einen in das Behälterinnere 35 weisenden Stromkabelanschluß 36 sowie einen in das Kunststoffrohrinnere 37 weisenden Stromkabelanschluß 38 auf. Die jeweils angeschlossenen Kabel sind in Fig. 2 mit 39 bzw. 40 bezeichnet. Insgesamt offenbart somit Fig. 2 eine Stromdurchführung, die auch bei tiefen Temperaturen vakuumdicht und damit funktionssicher ist.

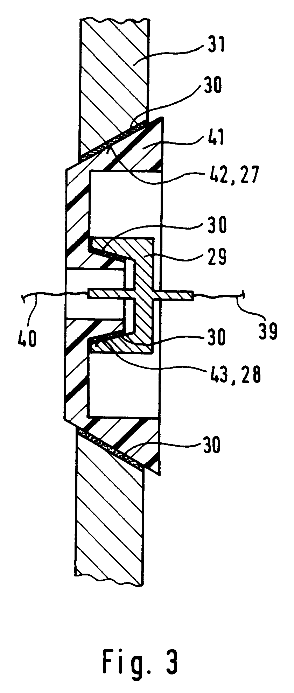

Fig. 3 zeigt ein weiteres Ausführungsbeispiel für eine erfindungsgemäße Stromdurchführung. Dabei besteht die Isolation aus einem stopfenförmigen Kunststoffrohr 41, dessen konischen Enden 42, 43 konzentrisch zueinander angeordnet sind. Diese Ausbildung ergibt eine besonders flachbauende Stromdurchführung.

## Patentansprüche

1. Stromdurchführung für in einem Behälter, vorzugsweise einem isolierten Behälter für die Speicherung von tiefsiedenden verflüssigten Gasen, angeordneten Stromleiter, wobei der Stromleiter durch eine Durchführungsöffnung (27) geführt ist, die gegenüber dem Stromleiter isoliert abgedichtet ist,
dadurch gekennzeichnet,
daß die Isolation aus einem Kunststoffrohr (26, 42) besteht, das einerseits mit der Durchführungsöffnung (27) und andererseits mit einer Anschlußöffnung (28) in einem Stromleiteranschlußstück (29) verbunden ist.

2. Stromdurchführung nach Anspruch 1,
dadurch gekennzeichnet,
daß die Verbindung zwischen dem Kunststoffrohr (26, 42) und der jeweiligen Öffnung (27 bzw. 28) als Kegelsitz ausgebildet ist und daß die jeweilige Öffnung nach ihrer Erwärmung und nach dem Aufbringen eines Klebers auf die Kegelflächen auf das Kunststoffrohr (26, 42) aufgeschrumpft ist.

3. Stromdurchführung nach Anspruch 1 oder 2,
dadurch gekennzeichnet,
daß der Neigungswinkel des Kegelsitzes zwischen 1 ° und 20 ° liegt.

4. Stromdurchführung nach einem der Ansprüche 1 bis 3,
dadurch gekennzeichnet,
daß das Kunststoffrohr (26, 42) und das Stromleiteranschlußtük (29) in das Behälterinnere (35) ragen.

5. Stromdurchführung nach einem der Ansprüche 1 bis 4,
dadurch gekennzeichnet,
daß das Stromanschlußstück (29) einen in das Behälterinnere (35) weisenden Anschluß (36) und einen in das Kunststoffrohrinnere (37) weisenden Anschluß (38) enthält.

## Claims

1. Current lead-through for a current conductor arranged in a container, preferably an insulated container for the storage of low-boiling liquefied gases, the current conductor being guided through a lead-through orifice (27) which is sealed off in an insulated manner relative to the current conductor, characterized in that the insulation consists of a plastic tube (26, 42) which is connected on the one hand to the lead-through orifice (27) and on the other hand to a junction orifice (28) in a current-conductor junction piece (29).

2. Current lead-through according to Claim 1, characterized in that the connection between the plastic tube (26, 42) and the respective orifice (27 or 28) is designed as a conical fit, and in that the respective orifice, after being heated and after the application of an adhesive to the conical surfaces, is shrunk onto the plastic tube (26, 42).

3. Current lead-through according to Claim 1 or 2, characterized in that the angle of inclination of the conical fit is between 1° and 20°.

4. Current lead-through according to one of Claims 1 to 3, characterized in that the plastic tube (26, 42) and the current-conductor junction piece (29) project into the container interior (35).

5. Current lead-through according to Claims 1 to 4, characterized in that the current junction piece (29) contains a junction (36) pointing into the container interior (35) and a junction (38) pointing into the plastic-tube interior (37).

## Revendications

1. Traversée de courant pour un conducteur de courant disposé dans un récipient, de préférence un récipient isolé pour le stockage de gaz liquéfiés à bas point d'ébullition, ce conducteur de courant passant à travers un orifice de traversée (27) qui est étanche et isolé par rapport à ce conducteur de courant, traversée de courant caractérisée en ce que l'isolation est constituée par un tube en matière synthétique (26, 42) qui est relié d'une part à l'orifice de traversée (25) et d'autre part à un orifice de raccordement (28) dans une pièce de raccordement (29) du conducteur de courant.

2. Traversée de courant selon la revendication 1 caractérisée en ce que la liaison entre le tube en matière synthétique (26, 42) et l'orifice considéré (27 ou bien 28) est réalisée sous la forme de siège conique et en ce que l'orifice considéré après son échauffement et après l'apport d'un adhésif sur les surfaces coniques, est fretté sur les surfaces coniques sur le tube en matière synthétique (26, 42).

3. Traversée de courant selon la revendication 1 ou la revendication 2 caractérisée en ce que l'angle d'inclinaison du siège conique se situe entre 1° et 20°.

4. Traversée de courant selon une des revendications 1 à 3 caractérisée en ce que le tube en matière synthétique (26, 42) et la pièce de raccordement (29) du conducteur du courant font saillie à l'intérieur (35) du récipient.

5. Traversée de courant selon une des revendications 1 à 4 caractérisée en ce que la pièce de raccordement (29) du conducteur de courant comprend un raccordement (36) dirigé vers l'intérieur (35) du récipient et un raccordement (38) dirigé vers l'intérieur (37) du tube en matière synthétique.
